# EUROPEAN PATENT SPECIFICATION

(11) **EP 0 595 070 B1**
(45) Date of publication and mention of the grant of the patent: **11.12.1996**
(21) Application number: 93116018.8
(22) Date of filing: 04.10.1993
(51) Int. Cl.: B24B 41/04, B23Q 1/26, H02K 7/09

(54) **Grinding wheel spindle equipment**
Schleifspindel Vorrichtung
Ensemble de broche de meulage

(30) Priority: 26.10.1992 JP 287940/92
(43) Date of publication of application: 04.05.1994
(73) Proprietor: SEIKO SEIKI KABUSHIKI KAISHA, Narashino-shi Chiba (JP)
(72) Inventor: Oda, Yoshimasa, c/o Seiko Seiki K.K., Narashino-shi, Chiba (JP); Ota, Masato, c/o Seiko Seiki K.K., Narashino-shi, Chiba (JP)
(74) Representative: Fleuchaus, Leo, Dipl.-Ing.

(56) References cited:
- EP-A- 0 333 352
- US-A- 1 500 401
- PATENT ABSTRACTS OF JAPAN vol. 10, no. 384 (E-466)(2441) 23 December 1986 & JP-A-61 173 646 (SUGANO JITSUMU KENKYUSHO K.K.) 5 August 1986
- PHILIPS TECHNICAL REVIEW vol. 41, no. 11 , 1983 , EINDHOVEN - NEDERLAND pages 348 - 361 E.M.H. KAMERBEEK 'Magnetic bearings.'

## Description

This invention relates to grinding wheel spindle equipments constituting grinding machines, and in particular relates to small lightweight planning therefor.

### DESCRIPTION OF THE PRIOR ART

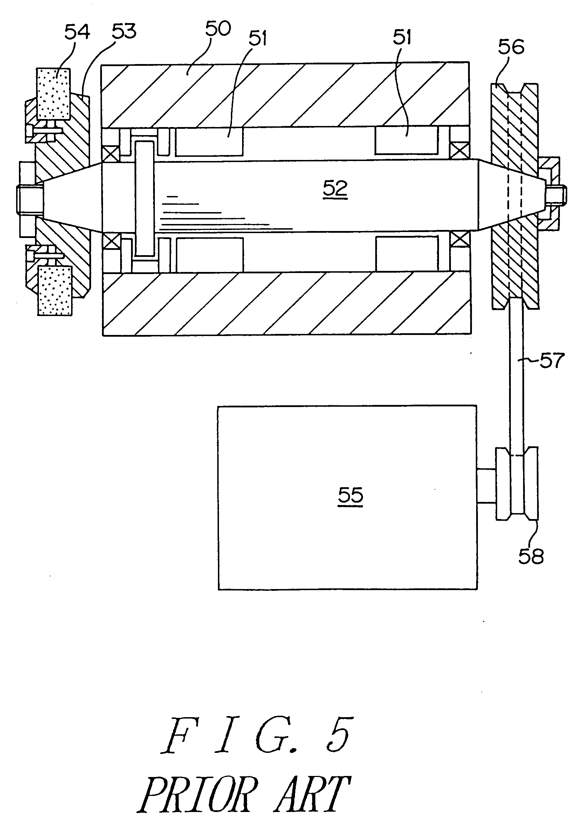

The conventional grinding wheel spindle equipment, as shown in Fig. 5, comprises a cylinder shaped rotating shaft 52 supported by bearings 51, 51 within a housing 50, a grindstone (grinder) 54 affixed in unitary with one-end of the rotating shaft 52 through a flange 53, a pulley 56 provided on the other-end of the rotating shaft 52, and a driving motor 55 coupling with the pulley 56 through a belt 57 and a motor pulley 58. In the grinding wheel spindle equipment, the grindstone 54 is rotated in unitary with the rotating shaft 52 which is driven by the driving motor 55 using the motor pulley 58, belt 57 and pulley 56,

In the conventional grinding wheel equipment, the grindstone 54 is affixed in unitary with one-end of the rotating shaft 52 through the flange 53, this means, the grindstone 54 and the flange 53 are together in one unit and sequentially arranged on an extended shaft center of the shaft 52, thus an entire length of the rotating shaft 52 is extended by a length corresponding to those of the grindstone 54 plus flange 53. In addition, the grindstone 54 and flange 53 are arranged shifted toward one-end of the rotating shaft 52, this strictly requires thicker thickness and larger diameter for the cylinder shaped shaft 52 for maintaining a required rigidity thereof. Hence, larger sizes arise in the housing 50 containing the rotating shaft 52 and in the supporting members of the bearing 51 supporting the rotating shaft 52, consequently, the larger scale and more weight are disadvantageously caused in the entire grinding wheel spindle equipment or in an entire depth-cutting motion unit. To reduce a contact pressure between the large and heavy depth-cutting motion unit (grinding wheel spindle equipment) and a guide of the depth-cutting transfer structure, and to smoothly slide the depth cutting motion unit along such guide, a guiding surface of the guide is required to form in wider size, the driving motor of the depth cutting transfer structure must be larger. Thus, a disadvantage arises in larger size of the depth cutting transfer structure in addition to the grinding wheel spindle equipment, and results in an inability to fine depth cut.

### SUMMARY OF THE INVENTION

The present invention has been made in view of the situation as described above. An object of the invention is to provide a grinding wheel spindle equipment with a small size and a light weight.

To achieve this object, the invention as claimed in Claim 1 provides a grinding wheel spindle equipment comprising: a pair of casings opposing each other; a fixed shaft having one-end fixed to one-side casing and the other-end fixed to the other-side casing; a cylinder shaped rotor positioned between the casings and rotatably inserted into the fixed shaft; a center flange provided in unitary on outer circumference of the rotor; a grindstone attached on outer circumference of the center flange; a radial magnetic bearing arranged between an inner circumference of the rotor and an outer circumference of the fixed shaft and supporting the rotor in its radius direction; an axial magnetic bearing provided between an end surface of the center flange and an inner wall surfaces of the casings and supporting the rotor in its shaft direction; and for rotating the rotor on its shaft center either driving motors arranged between the end surfaces of the center flange and the inner wall surfaces of the casings or a driving motor arranged between the inner circumference of the rotor and the outer circumference of the fixed shaft.

The invention as claimed in Claim 2 provides a grinding wheel spindle equipment comprising: a pair of casings opposing each other; a rotor having one-end opposed to one-side casing and the other-end opposed to the other-side casing; a center flange provided in unitary on outer circumference of the rotor; a grindstone attached on outer circumference of the center flange; radial magnetic bearings arranged between outer circumferences of the rotor and inner wall surfaces of the casings and supporting the rotor in its radius direction; an axial magnetic bearing provided between an end surface of the center flange and inner wall surfaces of the casings and supporting the rotor in its shaft direction; and for rotating the rotor on its shaft center either driving motors arranged between the end surfaces of the center flange and the inner wall surfaces of the casings or a driving motor arranged between the outer circumference of the rotor and the inner wall surface of the casing.

Since the grindstone and the center flange are arranged on the extended shaft center on an outer circumference of the rotor, and the grinding wheel spindle equipment is particularly made smaller towards the shaft center direction of the rotor, in addition, the rotor has a higher rigidity due to its center flange. Thus, the rotor comes to have a thinner thickness structure, a lightweight grinding wheel spindle equipment can be realized.

### BRIEF DESCRIPTION OF THE DRAWINGS

Fig. 1 is a sectional view of a grinding wheel spindle equipment showing one embodiment according to the present invention as claimed in Claim 1;
Fig. 2 is a sectional view of a grinding wheel spindle equipment showing another example according to the invention as claimed in Claim 1;
Fig. 3 is a sectional view of a grinding wheel spindle equipment showing another embodiment according to the invention as claimed in Claim 2;
Fig. 4 is a sectional view of a grinding wheel spindle equipment showing another example according to the invention as claimed in Claim 2; and
Fig. 5 is a sectional view of the conventional grinding wheel spindle equipment.

### DETAILED DESCRIPTION OF THE PREFERRED EMBODIMENT

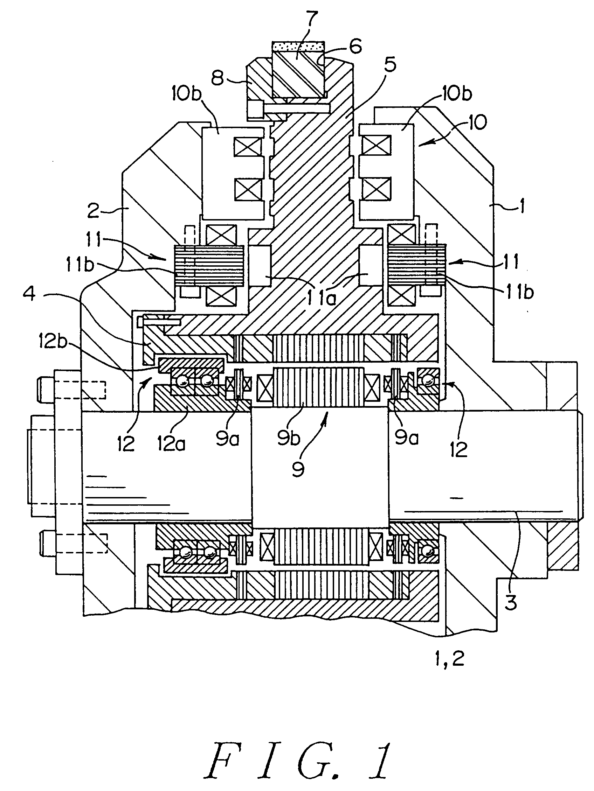

Embodiments of grinding wheel spindle equipments according to the present invention are described in detail referring to Figs. 1 to 4.

In Fig. 1, a grinding wheel spindle equipment includes a pair of casings 1 and 2 opposing at a predetermined interval each other, and a fixed shaft 3 arranged between the casings 1 and 2, where one-end of the fixed shaft 3 is fixed on a center of the one-side casing 1, and the other-end of the fixed shaft 3 is fixed on a center of the other-side casing 2.

A cylinder shaped rotor 4 rotatably inserted into the fixed shaft 3 is disposed between the casings 1 and 2, and a center flange 5 is formed in unitary on an outer circumference of the rotor 4. Both end surfaces of the center flange 5 oppose to inside wall surface-sides of the casings 1 and 2, and are formed respectively in a larger diameter than those of the casings 1 and 2. The center flange 5 has the outer circumference protruding to the outside from the casings 1 and 2.

A ring shaped grindstone 7, which is releasably attached on a ring shaped shoulder 6 formed on the outer circumference of the center flange 5, is fixed in unitary with the center flange 5 by a grindstone fix member 8. The grindstone 7 is arranged on the outer circumference of the rotor 4 through the center flange 5.

A radial magnetic bearing 9, which is provided between an inner circumference of the rotor 4 and an outer circumference of the fixed shaft 3, is constituted of radial positional sensors 9a and radial electromagnets 9b and the like, the radial positional sensors 9a and a radial electromagnet 9b are placed on the fixed shaft 3 side. The radial positional sensors 9a detect a distance from the rotor 4 along the radius direction of the rotor 4, the radial electromagnet 9b is excited in accordance with detected value from the radial positional sensors 9a, and a magnetic force due to such exciting acts on the inner circumference of the rotor 4 to support the rotor 4 in its radius direction.

An axial magnetic bearing 10, which is provided between an end surface of the center flange 5 and an inside wall surfaces of the casings 1 and 2, is formed of axial positional sensors (not shown) and axial electromagnets 10b, 10b and the like, the axial positional sensors (not shown) and the axial electromagnets 10b, 10b are arranged on the inside wall surface-sides of the respective casings 1 and 2. The axial positional sensors detect a distance from an end surface of the rotor 4 or a distance from an end surface of the center flange 5 each along a shaft center direction of the rotor 4, the axial electromagnets 10b, 10b are excited with reference to a detected value from the axial positional sensors, and such magnetic force due to exciting acts on the both end surfaces of the center flange 5 to support the rotor 4 in its shaft direction.

Two driving motors 11, 11 are provided between the end surface of the center flange 5 and the inside wall surfaces of the casings 1, 2. The both driving motors 11, which allow the rotor 4 to rotate on a shaft center in unitary with the center flange 5, are arranged opposing each other through the center flange 5, simultaneously armatures 11a, 11a of the driving motors 11, 11 are embedded in end surfaces of the center flange 5 respectively, stators 11b, 11b of the driving motors 11, 11 are mounted on the inside wall surfaces of the casings 1 and 2.

Protect bearings 12, 12 are disposed on both-sides of the radial magnetic bearing 9, an inside ring 12a of the protect bearing 12 is attached in unitary with the fixed shaft 3, simultaneously an outer ring 12b thereof is provided opposing to inner circumference of the rotor 4 at a very small gap therebetween.

In the grinding wheel spindle equipment thus constructed, the radial magnetic bearing 9 and the axial magnetic bearing 10 support the rotor 4 in its axis direction and radius direction respectively, where the driving motors 11, 11 rotate the rotor 4 in unitary with the center flange 5 on its shaft center.

The center flange is formed in unitary on outer circumference of the rotor and the grindstone is attached on outer circumference of the center flange, hence the grindstone and the center flange are provided in unitary on an extended line of the outer circumference of the rotor, where an extension of entire length of the rotor due to the grindstone and the center flange does not arise, and of course, a smaller size intends for the grinding wheel spindle equipment in the shaft center direction of the rotor, in addition, a rotor having a high rigidity due to the center flange can be applied without increasing a thickness, thereby lightweight policy intends for the grinding wheel spindle equipment, furthermore, the depth cutting transfer structure for depth cutting transfer of the small lightweight grinding wheel spindle equipment can also be made smaller size.

The use of magnetic bearings provides a gap between the rotor and the magnetic bearing and produces an electrical positional change of the rotor. Thus, the fine depth cutting can easily be performed without moving the depth cutting transfer structure.

The grindstone is attached on outer circumference of the center flange, the radial magnetic bearing is placed on inner circumference-side of the rotor, and the axial magnetic bearings and the driving motors are arranged on end surface-sides of the center flange. This means, the radial magnetic bearing, axial magnetic bearings and the driving motor and the like are arranged all incorporated collectively inside the grindstone, thus, work pieces are arranged on both end surface-sides of the grindstone, and the both work pieces can simultaneously be machined.

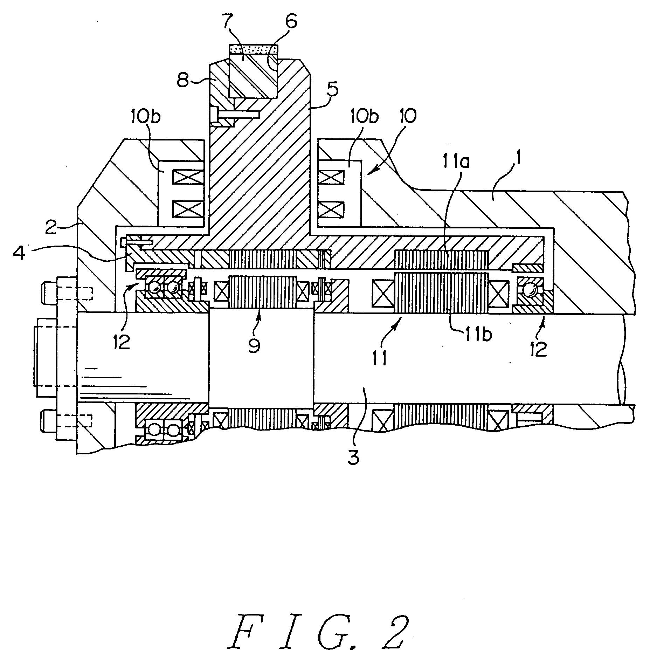

In the embodiment hereinbefore described, the driving motors 11 are provided between the end surface of the center flange 5 and the inside wall surfaces of the casings 1, 2. However for one example, a driving motor 11, as shown in Fig. 2, may preferable be provided between an outer circumference of a fixed shaft 3 and an inner circumference of a rotor 4, where an armature 11a of the driving motor 11 is embedded in inner circumference of the rotor 4, a stator 11b of the driving motor 11 is attached in unitary on outer circumference of the fixed shaft 3.

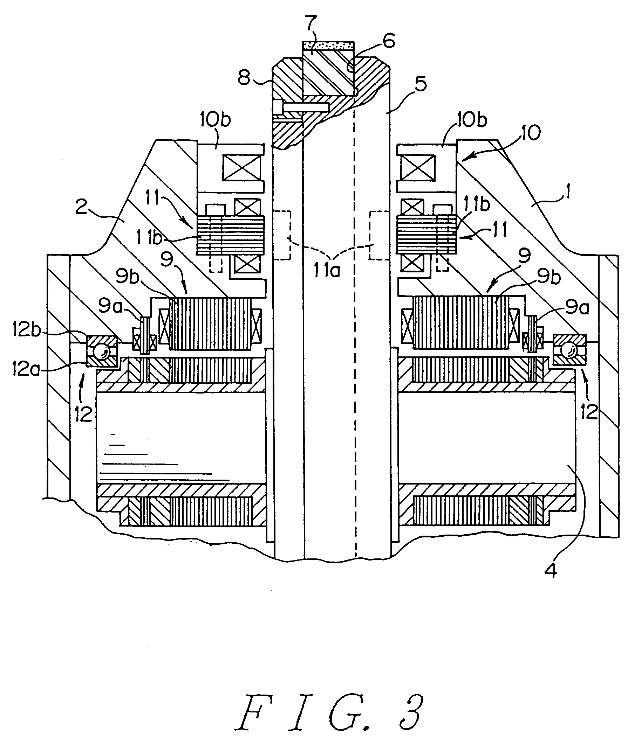

Fig. 3 shows one embodiment of a grinding wheel spindle equipment according to the invention as claimed in Claim 2. The same reference numerals are given to the same members as those described in the embodiment of the grinding wheel spindle equipment according to the invention as claimed in Claim 1.

In a grinding wheel spindle equipment in Fig. 3, a rotor 4, which is provided between a pair of casings 1 and 2 opposing each other at a predetermined interval therebetween, is arranged in that one-end thereof opposes to an inside wall surface of one-side casing 1 and the other-end opposes to an inside wall surface of the other-side casing 2.

A center flange 5 is formed in unitary on outer circumference of the rotor 4, a grindstone 7 is releasably attached on outer circumference of the center flange 5. But, such construction of the center flange 5 and the releasable structure of the grindstone 7 are the same as in the embodiment formerly described, the detailed description will therefore be omitted throughout.

Radial magnetic bearings 9, 9 are provided, on both end surface-sided of the center flange 5, between the outer circumference of the rotor 4 and the inner wall surface of the casings 1, 2, and the radial magnetic bearings 9, 9 are formed of radial positional sensors 9a and electromagnets 9b and the like, each pair of the radial positional sensor 9a and the electromagnet 9b is provided on one-side casing 1 and the other-side casing 2 respectively. The radial positional sensors 9a detect a distance from the rotor 4 along a radius direction of the rotor 4, the radial electromagnets 9b are excited with reference to detected-value from the radial positional sensors 9a, and a magnetic force by such excitation acts on outer circumference of the rotor 4 to support the rotor 4 in its radius direction.

An axial magnetic bearing 10 is provided between an end surface of the center flange 5 and inner wall surfaces of the casings, two driving motors 11, 11 are provided between the end surface of the center flange 5 and the inner wall surfaces of the casings 1, 2, but such constitution of the axial magnetic bearing 10 and the driving motors 11 is the same as the embodiment previously described, therefore the explanation thereof is omitted.

Protecting bearings 12, 12 are arranged on both end sides of the rotor 4, inner rings 12a of the protecting bearings 12 are arranged opposing each other at a very small interval from the outer circumference of the rotor 4, and outer rings 12b thereof are attached in unitary on inside wall surfaces of the casings 1, 2.

According to this grinding wheel spindle equipment, there also effects that the radial magnetic bearings 9 and the axial magnetic bearing 10 support the rotor 4 in a shaft direction and in a radius direction, and then the driving motors 11, 11 drive the rotor 4 in unitary with the center flange 5 on the shaft center.

Therefore, in the grinding wheel spindle equipment of the present embodiment, the center flange is formed in unitary on outer circumference of the rotor and the grindstone is attached on outer circumference of the center flange, hence the grindstone and the center flange are provided in unitary on an extended line of the outer circumference of the rotor, thus, an extension of an entire length of the rotor due to the grindstone and the center flange does not arise. Of course, a smaller size intends for the grinding wheel spindle equipment in the shaft center direction of the rotor, but in addition to this, a rotor with a thinner thickness can then be applied because the rotor has a high rigidity due to the center flange, thereby lightweight policy intends for the grinding wheel spindle equipment, in addition, the depth cutting transfer structure for depth cutting transfer of the small lightweight grinding wheel spindle equipment can also be made smaller size.

The use of magnetic bearing in this embodiment provides a gap between the rotor and the magnetic bearing and produces an electrical positional change of the rotor. Thus, the fine depth-cutting can easily be performed without moving the depth cutting transfer structure.

The grindstone is attached on outer circumference of the center flange, the radial magnetic bearings are placed on inner circumference-sides of the rotor, and the axial magnetic bearing and the driving motors are arranged on end surface-side of the center flange. This means, the radial magnetic bearings, axial magnetic bearing and the driving motors and the like are arranged all incorporated collectively inside the grindstone, thus, work pieces are arranged on both end surface-sides of the grindstone, and the both sides of work pieces can simultaneously be machined.

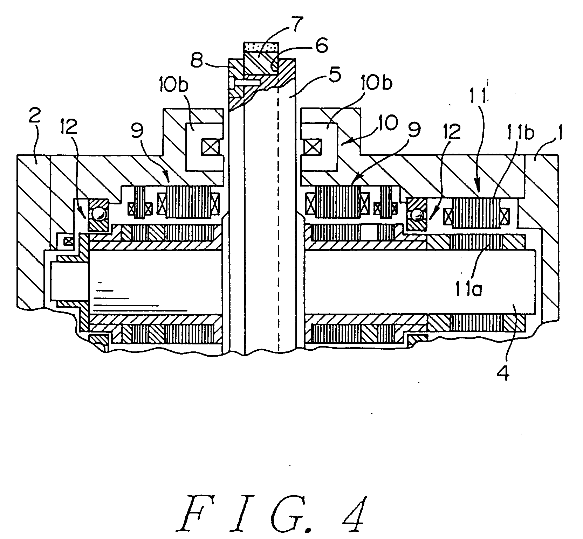

In the embodiment hereinbefore described, the driving motors 11 are provided between the end surface of the center flange 5 and the inside wall surfaces of the casings 1, 2. However for another example, a driving motor 11, as shown in Fig. 4, may preferable be provided between an outer circumference of a fixed shaft 3 and an inner circumference of a rotor 4, where an armatures 11a of a driving motor 11 is embedded in outer circumference of the rotor 4, a stator 11b of the driving motor 11 is attached in unitary on inner circumference of a casing 1.

In the effects of the grinding wheel spindle equipment according to the present invention, the center flange is formed in unitary on outer circumference of the rotor and the grindstone is attached on outer circumference of the center flange, hence the grindstone and the center flange are provided in unitary on an extended line of the outer circumference of the rotor, where an extension of an entire length of the rotor due to the grindstone and the center flange does not arise. For this reason, a smaller size, of course, intends for the grinding wheel spindle equipment in the shaft center direction of the rotor, but in addition to this, a rotor with a thinner thickness can then be applied because the rotor has a high rigidity due to the center flange. Thereby, lightweight policy intends for the grinding wheel spindle equipment, furthermore, the depth cutting transfer structure for depth cutting transfer of the small lightweight grinding wheel spindle equipment can also be made smaller size.

According to this grinding wheel spindle equipment, a gap is provided between the rotor and the magnetic bearing, and the electrical position of the rotor can be changed, thus, the fine depth-cutting can easily be performed without moving the depth cutting transfer structure.

The same effects as those described above can also be obtained in aspects of the present invention as claimed in Claim 2.

## Claims

1. A grinding wheel spindle equipment comprising:
a pair of casings (1,2) opposing each other;
a fixed shaft (3) having one-end fixed to one-side casing and the other-end fixed to the other-side casing;
a cylinder shaped rotor (4) positioned between the casings and rotatably inserted into the fixed shaft;
a center flange (5) provided in unitary on outer circumference of the rotor;
a grindstone (7) attached on outer circumference of the center flange;
a radial magnetic bearing (9) arranged between an inner circumference of the rotor and an outer circumference of the fixed shaft and supporting the rotor in its radius direction;
an axial magnetic bearing (10) provided between an end surface of the center flange and an inner wall surfaces of the casings and supporting the rotor in its shaft direction; and, for rotating the rotor on its shaft centre, either
driving motors (11) arranged between the end surfaces of the center flange and the inner wall surfaces of the casings or a driving motor (11) arranged between the inner circumference of the rotor and the outer circumference of the fixed shaft.

2. A grinding wheel spindle equipment comprising:
a pair of casings (1,2) opposing each other;
a rotor (4) having one-end opposing to one-side casing and the other-end opposing to the other-side casing;
a center flange (5) provided in unitary on outer circumference of the rotor;
a grindstone (7) attached on outer circumference of the center flange;
radial magnetic bearings (9) arranged between outer circumferences of the rotor and an inner wall surfaces of the casings and supporting the rotor in its radius direction;
an axial magnetic bearing (10) provided between an end surface of the center flange and an inner wall surfaces of the casings and supporting the rotor in its shaft direction; and, for rotating the rotor on its shaft centre, either
driving motors (11) arranged between the end surfaces of the center flange and the inner wall surfaces of the casings or a driving motor (11) arranged between the outer circumference of the rotor and the inner wall surface of the casing.

## Patentansprüche

1. Eine Schleifspindelvorrichtung, die beinhaltet: Ein einander gegenüberliegendes Gehäusepaar (1, 2);
eine feste Welle (3), deren ein Ende am Gehäuse auf der einen Seite und deren anderes Ende am Gehäuse auf der anderen Seite befestigt ist;
einen zwischen den Gehäusen angeordneten und drehbar in die feste Welle eingeführten zylindrischen Rotor (4);
einen am Außenumfang des Rotors in Einheit vorgesehenen Mittelflansch (5);
einen am Außenumfang des Mittelflansches befestigten Schleifstein (7);
ein zwischen innerem Umfang des Rotors und äußerem Umfang der festen Welle angeordnetes radiales Magnetlager (9), das den Rotor in radialer Richtung lagert;
ein zwischen einer Endfläche des Mittelflansches und einer Innenwandfläche der Gehäuse vorgesehenes axiales Magnetlager (10), das den Rotor in Wellenrichtung lagert; und
zum Drehen der Welle um ihren Wellenmittelpunkt entweder Antriebsmotoren (11), die zwischen den Endflächen der Mittelflansche und den Innenwandflächen der Gehäuse angeordnet sind,
oder einen Antriebsmotor (11), der zwischen dem Innenumfang des Rotors und dem Außenumfang der festen Welle angeordnet ist.

2. Eine Schleifspindelvorrichtung, die beinhaltet: Ein einander gegenüberliegendes Gehäusepaar (1, 2);
einen Rotor (4), dessen eines Ende gegenüber dem Gehäuse auf der einen Seite und dessen anderes Ende gegenüber dem Gehäuse auf der anderen Seite liegt;
einen in Einheit am Außenumfang des Rotors ausgebildeten Mittelflansch (5);
einen am Außenumfang des Mittelflansches befestigten Schleifstein (7);
zwischen äußerem Umfang des Rotors und Innenwandflächen der Gehäuse angeordnete radiale Magnetlager (9), die den Rotor in radialer Richtung lagern;
ein zwischen einer Endfläche des Mittelflansches und der inneren Wandfläche des Gehäuses vorgesehenes axiales Magnetlager (10), das den Rotor in Wellenrichtung lagert; und
zum Drehen der Welle um ihren Wellenmittelpunkt entweder Antriebsmotoren (11), die zwischen den Endflächen der Mittelflansche und den Innenwandflächen der Gehäuse angeordnet sind,
oder einen Antriebsmotor (11), der zwischen dem Außenumfang des Rotors und der Innenwandfläche des Gehäuses angeordnet ist.

## Revendications

1. Ensemble de broche de meulage comprenant :
- une paire de boîtiers (1, 2) opposés l'un à l'autre ;
- un arbre fixe (3) présentant une extrémité fixée à un côté du boîtier et l'autre extrémité fixée à l'autre côté du boîtier ;
- un rotor en forme de cylindre (4) placé entre les boîtiers et inséré de manière rotative dans l'arbre fixe ;
- une bride centrale (5) disposée de manière unitaire sur la circonférence externe du rotor ;
- une pierre de meulage (7) fixée sur la circonférence externe de la bride centrale ;
- un support magnétique radial (9) disposé entre une circonférence interne du rotor et une circonférence externe de l'arbre fixe et supportant le rotor dans sa direction radiale ;
- un support magnétique axial (10) disposé entre une surface terminale de la bride centrale et des surfaces de paroi interne des boîtiers et supportant le rotor dans la direction de son arbre ; et, pour faire tourner le rotor sur le centre de l'arbre
- soit des moteurs d'entraînement (11) disposés entre les surfaces terminales de la bride centrale et les surfaces de paroi interne des boîtiers, soit un moteur d'entraînement (11) disposé entre la circonférence interne du rotor et la circonférence externe de l'arbre fixe.

2. Ensemble de broche de meulage comprenant :
- une paire de boîtiers (1,2) opposés l'un à l'autre ;
- un rotor (4) présentant une extrémité opposée à un côté du boîtier et l'autre extrémité opposée à l'autre côté du boîtier ;
- une bride centrale (5) disposée de manière unitaire sur la circonférence externe du rotor ;
- une pierre de meulage (7) fixée sur la circonférence externe de la bride centrale ;
- des supports magnétiques radiaux (9) disposés entre les circonférences externes du rotor et des surfaces de paroi interne des boîtiers et supportant le rotor dans sa direction radiale ;
- un support magnétique axial (10) disposé entre une surface terminale de la bride centrale et des surfaces de paroi interne des boîtiers et supportant le rotor dans la direction de son arbre ; et, pour faire tourner le rotor sur le centre de l'arbre
- soit des moteurs d'entraînement (11) disposés entre les surfaces terminales de la bride centrale et les surfaces de paroi interne des boîtiers, soit un moteur d'entraînement (11) disposé entre la circonférence externe du rotor et la surface de paroi interne du boîtier.
